# EUROPEAN PATENT APPLICATION

(11) **EP 0 859 182 A2**
(43) Date of publication of application: **19.08.1998**
(21) Application number: 98301113.1
(22) Date of filing: 16.02.1998
(51) Int. Cl.: F16L 9/22, F16L 11/18

(54) **Bend stiffeners**

(30) Priority: 14.02.1997 GB 9703144
(71) Applicant: Tyrer, Andrew Charles Ratcliffe, Formby, Merseyside, L37 1LN (GB)
(72) Inventor: Tyrer, Andrew Charles Ratcliffe, Formby, Merseyside, L37 1LN (GB)
(74) Representative: W.P. Thompson & Co.

(57) **Abstract**

A bend stiffener has an elongate, frusto-conical, polyurethane body (10) which is moulded around adhered metal connecting sleeve (12) at one end. The body (10) has an elongate through aperture (14) for receipt of an end portion of a pipe (16). The body (10) is formed from several preformed sections (20,22,24,26) which are secured together. This facilitates the manufacture of the bend stiffener since the sections are much smaller than the assembled bend stiffener and each section takes a shorter time to solidify. Transport and installation of the sections is also easier as compared with an equivalent bend stiffener manufacture in one piece.

## Description

The present invention relates to bend stiffeners, and in particular, but not exclusively, to bend stiffeners for use in connecting a pipe to an offshore installation.

When a subsea pipe is connected to an offshore installation such as an oil production platform it is desirable to limit the flexion of the pipe, particularly in the region of its connection to the platform. Repeated flexion due to the motion of the sea and/or of the oil platform can result in damage to the pipe and to the connector to which it is attached.

It is known to limit the flexion in the region of the connection between the pipe and the offshore oil platform by installing a bend stiffener in the region of the connection. This is essentially a plastics cone which is located around the end of the pipe and around the end of the connector to which the pipe is attached. The bend stiffener can either be moulded onto the end of the pipe and around the connector in situ or can be in the form of a plastics cone prefabricated around a metal sleeve which is located on the exterior of the connector and the end portion of the pipe, the bend stiffener being secured in place by attachment means to a fixed portion of a pipe connector.

However, known bend stiffeners do suffer from a number of drawbacks as a result of their size. A typical bend stiffener is of the order of 5m in length and it is anticipated that bend stiffeners 15m or 20m in length will be commonplace in the foreseeable future.

Clearly, it is technically difficult to manufacture very large bend stiffeners. Not only is it necessary to have a very large mould in order to form the bend stiffener, but the size and weight of the finished product makes it difficult to manoeuvre, transport and install the product.

In accordance with a first aspect of the present invention, there is provided a bend stiffener comprising an elongate body having a through aperture for receipt of a pipe, cable or other elongate member, wherein the body comprises a plurality of preformed sections which are secured together.

In a preferred embodiment, each section comprises a portion of the length of an elongate bend stiffener, whereby adjacent sections are secured together end to end to form the bend stiffener.

Adjacent ends of the bend stiffener sections are preferably provided with a male/female connection to secure adjacent sections together. This may be in the form of a spigot and socket type connection. Advantageously, the spigot and socket are complementarily screw-threaded, such that adjacent bend stiffener sections may be secured together by means of the screw-threaded arrangement.

The sections may be joined along a plane which is inclined to the transverse direction of the body, e.g. parallel to the longitudinal body axis. The plane may intersect the longitudinal axis of the body.

The connection between adjacent ends of the bend stiffener may comprise at least one connecting flange. One or more body sections may have a connecting flange at each end. One or more body sections may comprise a reduced diameter portion between the end flanges.

Adjacent ends of the bend stiffener sections may each comprise a securing flange for securing together adjacent body sections.

The body sections may be bonded together, e.g. by adhesive.

There may also be means, e.g. a rigid collar, for securing the bend stiffener to a fitting.

In accordance with a second aspect of the present invention, there is provided a method of manufacturing a bend stiffener comprising making a plurality of bend stiffener sections and subsequently securing the sections together.

The sections may be assembled prior to fitting the bend stiffener onto an elongate member or may be located on the elongate member to be protected and then subsequently assembled.

By way of example only, specific embodiments of the present invention will now be described, with reference to the accompanying drawings, in which: -
Fig. 1 is a side view of a first embodiment of bend stiffener in accordance with the present invention, shown connected to a pipe fitting;
Fig. 2 is an exploded perspective view of the bend stiffener illustrated in Fig. 1;
Fig. 3 is a side view of a second embodiment of bend stiffener in accordance with the present invention;
Fig. 4 is an exploded side view of a third embodiment of bend stiffener in accordance with the present invention;
Fig. 5 is a side view of a fourth embodiment of bend stiffener in accordance with the present invention; and
Fig. 6 is an exploded side view of a fifth embodiment of bend stiffener in accordance with the present invention.

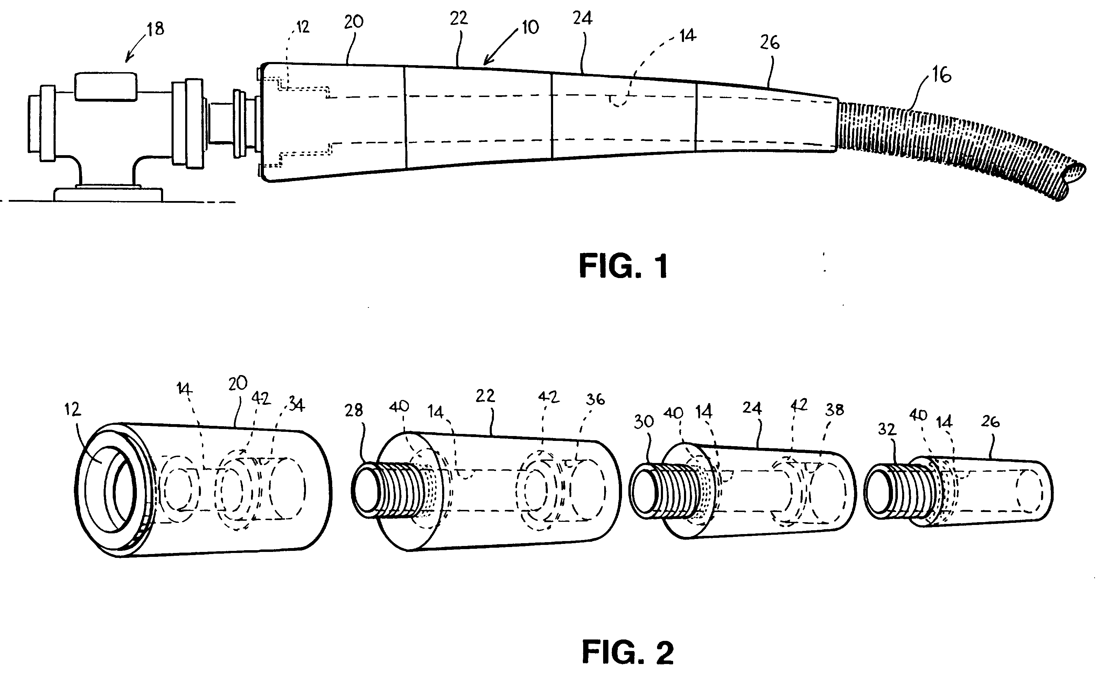

Referring to Figs 1 and 2, a bend stiffener comprises an elongate, generally frusto-conical, substantially impervious, polyurethane body 10 which is moulded around a short metal sleeve 12 located at one end of the bend stiffener. The bend stiffener is provided with an elongate longitudinal through aperture 14 aligned with the longitudinal axis of the body which is shaped to receive an end portion of a pipe 16 which is secured to an end fitting 18. The fitting may, for example, be located above a water surface on an oil production platform or below the water surface at a well head.

As will be apparent from the drawings, the bend stiffener is formed from a plurality of interconnected frusto-conical bend stiffener sections 20, 22, 24 and 26. The number of sections can vary, depending on the length of the completed bend stiffener. As will be apparent from Fig. 2, the longitudinally inner end of all but the innermost section 20 is provided with an externally threaded tubular metal spigot 28, 30, 32 which is moulded into its associated section and is adapted to be received in a complementarily-threaded cylindrical metal socket 34, 36, 38 which is also moulded into the adjacent bend stiffener section 20, 22, 24. Each of the threaded spigots and threaded sockets is arranged coaxially with the longitudinal axis of the through aperture 14 of the bend stiffener and is contiguous with the aperture 14 in each section. The metal spigots and sockets are each provided with an annular flange 40,42 respectively at their inner end, embedded in the polyurethane during moulding, to anchor the metal fittings in position.

The bend stiffener may thus be manufactured in a number of separate sections and subsequently assembled to form the completed bend stiffener. This facilitates the manufacture of the bend stiffener. Firstly, the moulded portions are considerably smaller than the assembled bend stiffener and thus each bend section will take a shorter time to solidify during manufacture. Moreover, manoeuvring the separate sections is much easier than moving an equivalent bend stiffener manufactured in one piece.

Similarly, the manufacture of the bend stiffener in separate sections facilitates the transport, storage and installation of the bend stiffener.

In use, each of the bend stiffener sections is located in turn over the end of the pipe 16 and adjacent sections are secured together by means of the screw-threaded connections. Additional securing means may be used, for examples adhesives between adjacent sections and/or heat-welding adjacent sections together. Once the bend stiffener has been assembled on the end of the pipe 16 the completed bend stiffener may then be attached to the pipe connector, as shown in Fig. 1.

In a modification of the above construction, the spigots and sockets may be formed from polyurethane integrally with the associated section, instead of being formed from metal.

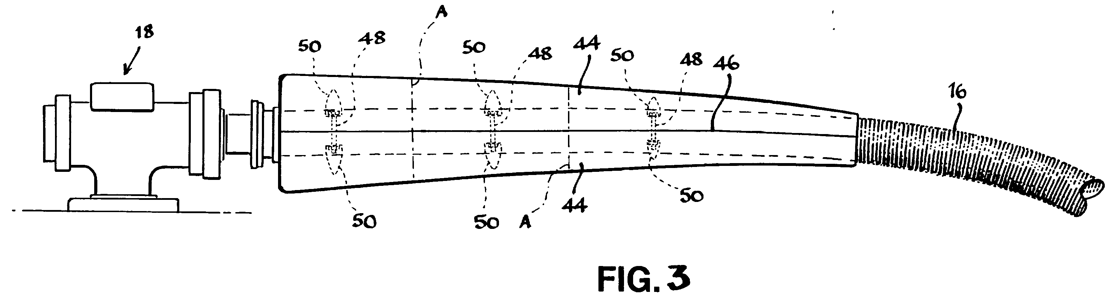

A second embodiment of the present invention is illustrated in Fig. 3, instead of being formed from two or more sections which are joined along (radial) planes transverse to the longitudinal axis of the bend stiffener, the bend stiffener is formed from two sections 44 which are joined along a plane 46 which is inclined to the transverse direction, in this case parallel to the longitudinal axis of the bend stiffener. In the embodiment of Fig. 3 the plane along which the two sections join passes through the longitudinal axis of the bend stiffener.

The two sections of the bend stiffener can be secured together by any suitable means. In the embodiment illustrated the sections are bonded together with adhesive. However, the sections may alternatively, or in addition, be secured together by means of metal bands clamped to the exterior or by bolts 48 passing through aligned apertures 50 in the two assembled sections, for example.

Moreover, the bend stiffener may be formed from three or more sections, if desired. An increase in the number of sections reduces the weight of each section and also reduces the time taken for each section to solidify during manufacture.

In addition to being joined along a plane which is inclined to the transverse axis of the body, the body may also comprise sections which are joined along an axis A which is transverse to the axis of the body, as illustrated in chain dot in Fig. 3. Any suitable means for securing together the longitudinally adjacent body sections thus formed (e.g. by bolts, adhesive etc) can be used.

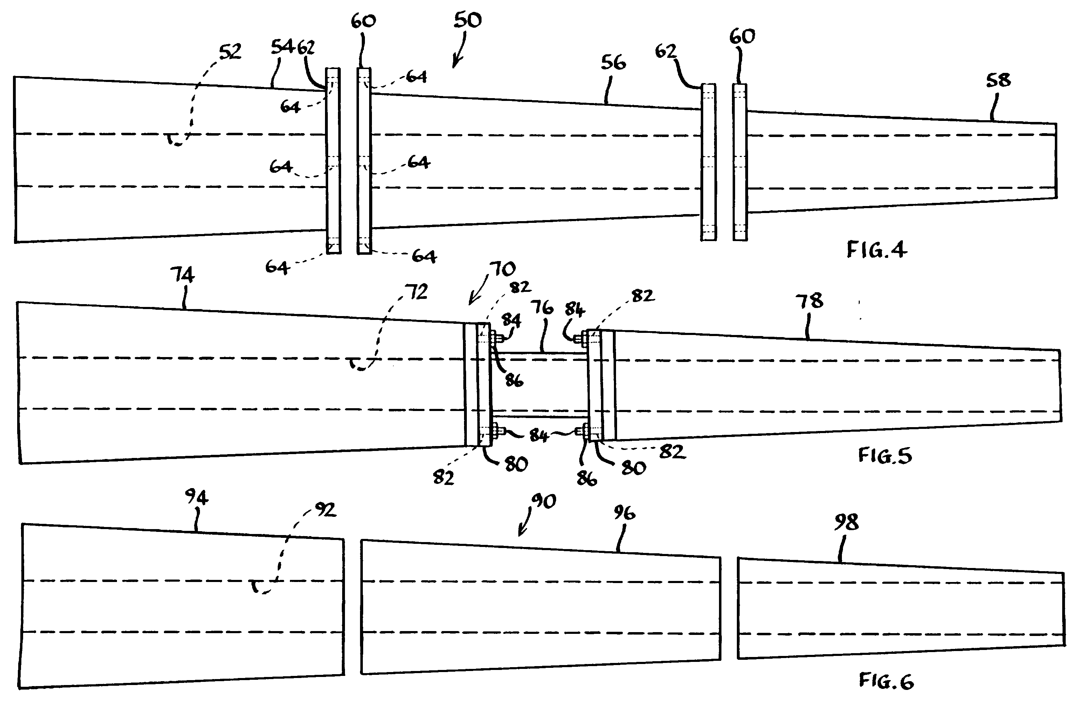

Third, fourth and fifth embodiments are illustrated in Figs. 4, 5 and 6 respectively. These embodiments are of the general type illustrated in Figs 1 and 2, namely where the bend stiffener is formed from several short sections which are assembled end-to-end along planes transverse to the longitudinal axis and secured together to form the bend stiffener.

The bend stiffener illustrated in Fig. 4 (shown in exploded view) comprises an elongate, generally conical, substantially impervious, polyurethane body 50 having an elongate longitudinal through aperture 52 which is shaped to receive an end portion of a pipe 16, as in the first embodiment. The body 50 is formed from three interconnected frusto-conical sections 54, 56, 58, although the number of sections can vary, depending on the length of the completed bend stiffener.

The longitudinally inner end of all but the innermost section 54 is provided with an annular securing flange 60 which is adapted to co-operate with a corresponding annular flange 62 on the longitudinally outer end of the adjacent section. The bend stiffener may then be assembled by positioning the sections 58, 56, 54 (normally in that order) in turn over the end of a pipe 16 and securing together the co-operating flanges 60,62 to form the bend stiffener. The co-operating flanges may, for example, be secured together by means of bolts passing through aligned apertures 64 in abutting co-operating flanges 60,62 or by clamps (not illustrated) which hold the abutting flanges 60,62 in position with respect to one another.

The bend stiffener of Fig. 5 generally is of very similar overall dimensions to that of Fig. 4 and comprises an elongate, substantially impervious, polyurethane body 70 having an elongate longitudinal through aperture 72 which is shaped to receive an end portion of a pipe 16, as in the embodiment of Fig. 4. The body 70 is formed from three interconnected sections 74,76,78, although the number of sections can vary, depending on the length of the completed bend stiffener.

The innermost and outermost sections 74,78 are generally frusto-conical in shape. However, the central section 76 is tubular (i.e. extremely cylindrical in shape) and is provided with an annular securing flange 80 at each end. Each of the flanges is provided with a plurality of apertures 82, each of which is adapted to receive the end of a securing bolt 84 projecting from the innermost end of each of the end sections 74,78 when the three sections are correctly aligned. The bolts 84 are embedded in the outermost sections 74,78 during moulding, such that they project from the innermost faces of the sections parallel to the longitudinal direction of the assembled bend stiffener.

As for the previous embodiment, the bend stiffener is assembled by locating the sections 78,76,74 (normally in that order) in turn over the end of a pipe 16 and securing together adjacent sections by locating the projecting ends of the bolts 84 in the corresponding apertures 82 in the adjacent flange 80 of the central portion and securing the sections together by means of securing nuts 86 threaded onto the ends of the bolts 84.

The bend stiffener of Fig. 6 is of very similar dimensions to that of Fig. 4 and comprises a generally conical elongate, substantially impervious, polyurethane body 90 having an elongate longitudinal through aperture 92 which is shaped to receive an end portion of a pipe 16, as in the embodiment of Fig. 4. The body 90 is formed from three frusto-conical sections 94, 96, 98.

The bend stiffener is assembled by locating the sections 98, 96, 94 (normally in that order) in turn over the end of a pipe 16. Adjacent sections are then bonded together by applying a suitable adhesive (such as an epoxy resin) to the abutting end faces of a adjacent sections.

The invention is not restricted to the details of the foregoing embodiment.

For example, in the embodiments of Figs. 3 to 6 the innermost section may be provided with a metal sleeve, similar to the sleeve 12 of the first embodiment. Moreover, more than one means of securing together adjacent sections may be used. For example, adjacent sections may be secured together by bonding with adhesive as well as by means of bolts and nuts or by means of a threaded spigot and socket.

It is not necessary for the sections to be located on the end of the pipe 16 before they are secured. It is possible for the sections to be joined to form a completed bend stiffener and for the completed bend stiffener then to be located in position on the end of the pipe 16.

## Claims

1. A bend stiffener comprising an elongate body having a through aperture for receipt of a pipe, cable or other elongate member, wherein the body comprises a plurality of preformed sections which are secured together.

2. A bend stiffener as claimed in claim 1, wherein each section comprises a portion of the length of the elongate body, whereby longitudinally adjacent sections are secured together end-to-end.

3. A bend stiffener as claimed in claim 2, wherein adjacent ends of the body sections are provided with a male/female connection.

4. A bend stiffener as claimed in claim 3, wherein the male/female connection comprises a spigot and socket type connection.

5. A bend stiffener as claimed in claim 4, wherein the spigot and socket are complementarily screw-threaded.

6. A bend stiffener as claimed in any of claims 2 to 5, comprising a plurality of sections which are joined along a plane which is inclined to the transverse direction of the body.

7. A bend stiffener as claimed in claim 6, comprising a plurality of sections which are joined along a plane which is parallel to the longitudinal axis of the body.

8. A bend stiffener as claimed in claim 7, wherein the plane intersects the longitudinal axis of the body.

9. A bend stiffener as claimed in claim 1 or claim 2, wherein the connection between adjacent ends of the bend stiffener sections comprises at least one securing flange.

10. A bend stiffener as claimed in claim 9, comprising a body section having a connecting flange at each of its two ends.

11. A bend stiffener as claimed in claim 10, wherein the body section comprises a reduced diameter portion between the flanges.

12. A bend stiffener as claimed in claim 9, wherein adjacent ends of the bend stiffener sections each comprise a securing flange for securing together adjacent body sections.

13. A bend stiffener as claimed in any of the preceding claims, wherein the body sections are bonded together.

14. A bend stiffener as claimed in claim 13, wherein the body sections are bonded together by adhesive.

15. A bend stiffener as claimed in any the preceding claims, comprising means for securing the bend stiffener to a fitting.

16. A bend stiffener as claimed in claim 15, wherein the means for securing the bend stiffener to a fitting comprises a rigid collar.

17. A bend stiffener as claimed in any preceding claims, wherein the body is generally frusto-conical.

18. A method of manufacturing a bend stiffener comprising making a plurality of bend stiffener sections and subsequently securing the sections together.

19. A method as claimed in claim 18, wherein the sections are assembled and secured together prior to fitting bend stiffener onto an elongate member to be protected.

20. A method as claimed in claim 18, wherein the bend stiffener sections are located on an elongate member to be protected and then subsequently assembled and secured.
